# EUROPEAN PATENT APPLICATION

(11) **EP 1 158 163 A2**
(43) Date of publication of application: **28.11.2001**
(21) Application number: 01112413.8
(22) Date of filing: 21.05.2001
(51) Int. Cl.: F04B 27/08

(54) **Piston for swash plate compressor**

(30) Priority: 23.05.2000 JP 2000151152
(71) Applicant: Kabushiki Kaisha Toyoda Jidoshokki Seisakusho, Aichi-ken (JP)
(72) Inventor: Ota, Masaki, K.K. Toyoda Jidoshokki Seisakusho, Kariya-shi, Aichi-ken (JP); Suitou, Ken, K.K. Toyoda Jidoshokki Seisakusho, Kariya-shi, Aichi-ken (JP); Tarutani, Tomoji, K.K.Toyoda Jidoshokki Seisakusho, Kariya-shi, Aichi-ken (JP); Kawai, Toshihiro, K.K.Toyoda Jidoshokki Seisakusho, Kariya-shi, Aichi-ken (JP); Ueda, Yasunori, K.K.Toyoda Jidoshokki Seisakusho, Kariya-shi, Aichi-ken (JP); Ito, Masafumi, K.K.Toyoda Jidoshokki Seisakusho, Kariya-shi, Aichi-ken (JP)
(74) Representative: Leson, Thomas Johannes Alois, Dipl.-Ing.

(57) **Abstract**

A piston includes an engaging portion for engaging with a piston drive mechanism for reciprocating the piston, a hollow head portion with an opening at its one end, and a disc-shaped end plate for closing the opening of the hollow head portion. The piston further includes a central axial protrusion extending in the axial direction. The protrusion is formed integrally with the hollow head portion. The end plate is connected to the central axial protrusion of the hollow head portion. The end plate also has a protrusion protruding towards the central axial protrusion of the hollow head. One of the protrusions has a fitting hole to which the other is press-fitted, thereby connecting the hollow head portion to the end plate to close the opening of the hollow head portion. A diameter of the disc-shaped end plate is smaller than an outer diameter of the cylindrical hollow head portion. Accordingly, the hollow head portion of the piston slides in a cylinder bore of the compressor without any contact between the end plate and the cylinder bore.

## Description

### BACKGROUND OF THE INVENTION

The present invention relates to a piston for use in a compressor, and more particularly, to a piston having a hollow head.

A reciprocating piston for use in a compressor is requested to reduce its weight. A piston for use in a swash plate type compressor, more particularly, in a variable displacement type swash plate compressor is highly required to reduce its weight. In the variable displacement type swash plate compressor, when its discharge capacity is controlled by controlling an inclination angle of the swash plate, weight of the piston has a great influence on the control of the inclination angle of the swash plate. Therefore, in prior art, a head portion of the piston fitted in a cylinder bore of the compressor is hollow.

The hollow piston is in general manufactured such that, after a hollow head portion having an opening at its one end and an end portion are separately provided, the end opening of the hollow head portion is closed by the end portion. In this case the outer periphery of the end portion is secured to the outer periphery of the hollow head portion of the piston by one or combination of welding, brazing, adhering, press-fitting, threading, and caulking.

However, it is generally required in the conventional piston to thicken a wall of at least one of the hollow head portion and the end portion in order to align them, fit the one to the other and attach them together by welding etc. Moreover, since the end portion is secured at its periphery to the periphery of the hollow head portion, the end portion should have thickness enough to endure gas pressure in a compression chamber. The thick wall prevents the piston from being light.

Furthermore, if one of the hollow head portion and the end portion is press-fitted inside the other, the outside one slightly expands due to the press-fitting. Therefore, after-machining to cut off the expanded portion is required.

### SUMMARY OF THE INVENTION

The object of the present invention is to provide a hollow head piston easily manufactured.

To achieve the above object, the present invention has a hollow head piston for use in a compressor. The hollow head piston has a hollow head portion with an opening at its one end, an end portion closing the opening of the hollow head portion, and a connecting portion axially extending and connecting the hollow head portion to the end portion.

In the present invention neither a thick hollow head nor a thick end wall of the piston is required because the hollow head and the end wall are connected by the connecting portion, not necessarily aligned at their outer peripheries to each other. The connecting portion may support the end wall so that a thick end wall is not necessary to endure the pressure. Nor, press-fitting the one of outer peripheries in the other, causing expansion of the outer periphery, is necessary. The after-machining is therefore not required.

Furthermore, when the piston is reduced in weight, the cost of manufacturing may decrease because of the less expense of material. Connecting a small diameter portion such as the connecting portion is easier than connecting a large diameter portion such as the outer peripheries in the prior art. Accordingly, the cost of manufacturing may be reduced.

### BRIEF DESCRIPTION OF THE DRAWINGS

The features of the present invention that are believed to be novel are set forth with particularity in the appended claims. The invention together with objects and advantages thereof, may best be understood by reference to the following description of the presently preferred embodiments together with the accompanying drawings in which:
Fig. 1 is a cross-sectional side view illustrating a swash plate compressor having a hollow head piston therein;
Fig. 2(a) is a partial cross-sectional side view illustrating the piston in Fig. 1;
Fig. 2(b) is a cross-sectional view as seen from line IIb-IIb in Fig. 2(a);
Fig. 3 is a partial cross-sectional side view illustrating a blank in a process of manufacturing the pistons;
Fig. 4 is a partial cross-sectional side view to describe a process of manufacturing the piston;
Fig. 5 is an enlarged cross-sectional side view illustrating connection between a hollow head and a disc-shaped end wall of the piston;
Fig. 6 is an enlarged partial cross-sectional side view illustrating a hollow head of the piston;
Fig. 7 is an enlarged partial cross-sectional side view illustrating a hollow head of the piston;
Fig. 8 is an enlarged partial cross-sectional side view illustrating a hollow head of the piston;
Fig. 9 is an enlarged partial cross-sectional side view illustrating a hollow head of the piston;
Fig. 10 is a partial cross-sectional side view illustrating a piston with a screw; and
Fig. 11 is a side view illustrating a piston having holes at its hollow head.

### DETAILED DESCRIPTION OF THE PREFERRED EMBODIMENTS

A hollow head piston and a swash plate compressor employed in a vehicle air conditioner according to embodiments of the present invention will now be described, referring to the drawings.

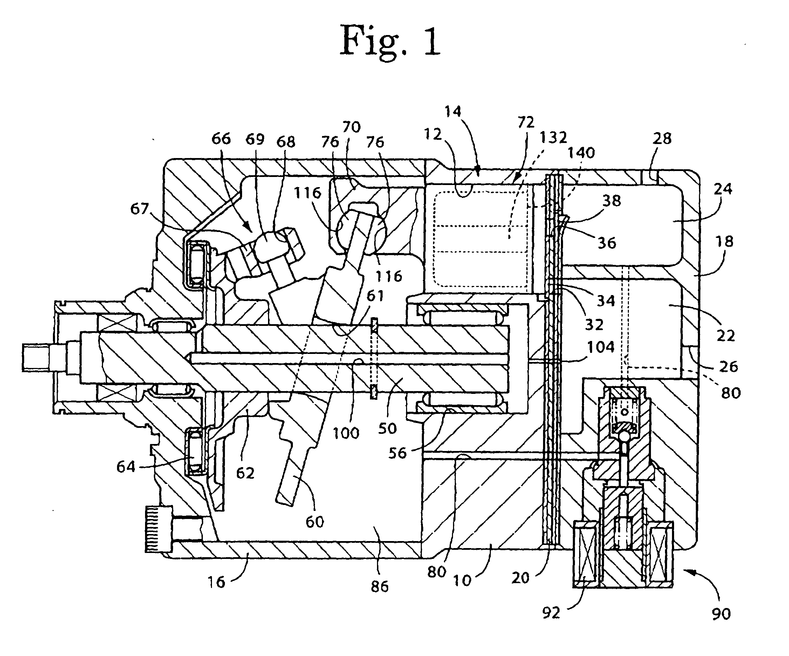

The swash plate compressor is shown in Fig. 1. A plurality of cylinder bores 12 (only one is shown) extending in parallel with a central axis of a cylinder block 10 therearound are arranged with equal angular intervals. A single-headed piston 14 is accommodated in each the cylinder bore 12 to be reciprocated. A front housing 16 is secured to a front end of the cylinder block 10. A rear housing 18 is secured to a rear end surface of the cylinder block 10 through a valve plate 20. A housing assembly of the swash plate compressor is constituted by the front housing 16, the rear housing 18 and the cylinder block 10. A suction chamber 22 and a discharge chamber 24 are formed in the rear housing 18. The suction and discharge chambers 22, 24 are connected to a refrigerant circuit, which is not illustrated, through an inlet 26 and an outlet 28, respectively. A suction port 32, a suction valve 34, a discharge port 36 and a discharge valve 38 are formed on the valve plate 20 in correspondence with each the cylinder bore 12.

A drive shaft 50 is rotatably mounted to the central axis of the cylinder block 10. The drive shaft 50 is supported by the front housing 16 and the cylinder block 10 through bearings at both its end portions. A central support hole 56 is formed in the central part of the cylinder block 10 to support the drive shaft 50. The front end portion of the drive shaft 50 is connected to a vehicle engine as an outer drive source (not illustrated) through a clutch mechanism such as a magnetic clutch. When the vehicle engine operates and the drive shaft 50 is coupled with the vehicle engine by the clutch mechanism, the drive shaft 50 rotates around its axis.

A swash plate 60 is mounted on the drive shaft 50. A through hole 61 is formed at the center of the swash plate 60, and the drive shaft 50 penetrates the through hole 61. The vertical length of the through hole 61 gradually increases from its axially intermediate portion towards the axially opposite ends. Both end openings of the through hole 61 are elliptically shaped. A rotor 62 is mounted on the drive shaft 50 and is supported by the front housing 16 through a thrust bearing 64. The swash plate 60 rotates integrally with the drive shaft 50 by a hinge mechanism 66. The swash plate 60 is also movable in the axial direction and inclinable with respect to the drive shaft 50. The hinge mechanism 66 includes a pair of support arms 67 protruding from the rotor 62, the support arms 67 each having a guide hole 68, and a pair of guide pins 69, protruding from the swash plate 60, each slidably fitted in the guide hole 68. In this embodiment the swash plate 60, the drive shaft 50, and the hinge mechanism 66 constitute a piston drive mechanism which reciprocates the piston 14.

The piston 14 is a kind of a hollow head piston. The piston 14 includes an engaging portion 70 and a hollow cylindrical head portion 72. The hollow cylindrical head portion 72 is fitted in the cylinder bore 12. The engaging portion 70 which is formed integrally with the head portion is engaged with the swash plate 60 through a pair of hemispherical shoes 76. The shape of the piston 14 will be described in detail afterward.

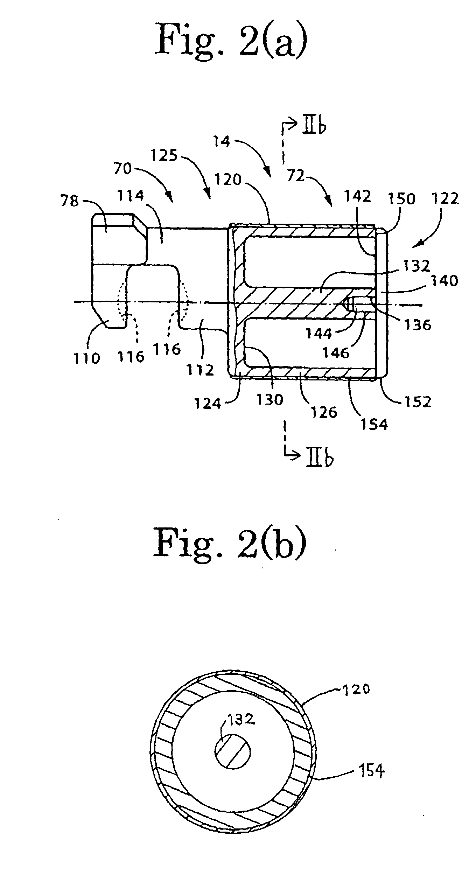

Rotating movement of the swash plate 60 is converted to reciprocating movement of the piston 14 through the shoes 76. When the piston 14 in the suction stroke moves from the top dead center to the bottom dead center, refrigerant gas in the suction chamber 22 is drawn into the cylinder bore 12 through the suction port 32, opening the suction valve 34. When the piston 14 in the discharge stroke moves from the bottom dead center to the top dead center, the refrigerant gas in the cylinder bore 12 is compressed, and discharged into the discharge chamber 24 through the discharge port 36, opening the discharge valve 38. The compressive reaction force acting on the piston 14 in the axial direction during the compression of the refrigerant gas is received by the front housing 16 through the piston 14, the swash plate 60, the rotor 62, and the thrust bearing 64. A rotation preventing portion 78 (which is illustrated in Fig. 2) is formed integrally with the engaging portion 70 of the piston 14. The rotation preventing portion 78 contacts an inner peripheral surface of the front housing 16 before any contact between the piston 14 and the swash plate 60, thereby to prevent the piston 14 from rotating around a central axis of the piston 14. Accordingly, the collision between the piston 14 and the swash plate 60 is avoided.

A crank chamber 86 is defined between the front housing 16 and the cylinder block 10. A supply passage 80 is formed in the cylinder block 10 and the rear housing 18. The passage 80 connects the crank chamber 86 and the discharge chamber 24. A displacement control valve 90 is arranged in the supply passage 80. The displacement control valve 90 is a magnetic valve equipped with a solenoid 92 excited and de-excited by a control device mainly constituted by a computer (not illustrated). An opening degree of the displacement control valve 90 is adjusted due to the supplied electric current to the solenoid 92 in accordance with a cooling load.

A releasing passage 100 is formed in the drive shaft 50. The releasing passage 100 opens to both the central support hole 56 at its rear end and the crank chamber 86 at its front side. The central support hole 56 communicates with the suction chamber 22 through a releasing port 104.

The swash plate compressor according to the embodiment is a variable displacement type. Pressure in the crank chamber 86 is adjusted due to the pressure difference from the discharge chamber pressure as a higher pressure and the suction chamber pressure as a lower pressure. The difference between the crank chamber pressure acting rearward on the piston 14 and the cylinder bore pressure acting frontward on the piston 14 is adjusted due to the crank chamber pressure. The stroke of the piston 14 accompanied by the inclination angle of the swash plate 60 is changed. Therefore, the discharge capacity of the compressor is adjusted. In detail, the crank chamber 86 is selectively connected to and disconnected from the discharge chamber 24 by the solenoid 92 of the displacement control valve 90 de-excited and excited. Therefore, the pressure in the crank chamber 86 is adjusted.

The cylinder block 10 and the piston 14 are made of aluminum alloy. The outer peripheral surface 154 of the piston 14 is coated with fluoro resin film, which prevents a direct contact between the same kinds of metal. As a result, seizure is prevented. Clearance between the coated piston 14 and the cylinder bore 12 is minimized. In this case, the cylinder block 10 and the piston 14 are made of aluminum silicon alloy. The cylinder block 10, the piston 14 and a coating layer 120 with fluoro resin film may be made of other kind of material.

The piston 14 will now be described further in detail, referring to Figs. 2-5.

The engaging portion 70 of the piston 14 is approximately U-shaped as shown in Fig. 2. The engaging portion 70 includes an axially extending bridge portion 114 and a pair of arms 110, 112 extending from the bridge portion 114 in the direction perpendicular to the axis of the piston 14. A substantially spherical concave 116 is formed in each the arm 110, 112 at its surface facing the other. The concaves 116 each slidably receive the semispherical surface of shoes 76. The spherical concave surfaces partially constitute a hypothetical single globe. The plane surfaces of the shoes 76 each contact the respective sliding surface of the swash plate 60. The shoes 76 sandwich the outer peripheral portion of the swash plate 60.

The hollow head portion 72 of the piston 14 includes a cylindrical wall 126 and a bottom wall 124 integrally formed with the engaging portion 70. The cylindrical wall 126 extends from the bottom wall 124 and has an opening at its end opposite to the bottom wall 124. An end portion or plate 122 as a closure member is fixed to the cylindrical wall 126 of the hollow head portion 72. The end plate 122, which includes a disc 140, closes the opening of the hollow head portion 72. A connecting portion or a central axial protrusion 132 is formed integrally with the bottom wall 124 of the hollow head portion 72, centrally extending parallel with the cylindrical wall 126. The central axial protrusion 132 protrudes from a center of an inner lateral surface 130 of the bottom wall 124. The protrusion 132 has a distal end 183 having a fitting hole 136 at its top. The end plate 122 also has a connecting portion or a protrusion 144 centrally axially extends from the disc 140 toward the inner space of the hollow head portion 72. The protrusion 144 of the end plate 122 is press-fitted in the fitting hole 136 of the central axial protrusion 132 of the hollow head portion 72 until the end plate 122 completely closes the opening of the hollow head portion 72.

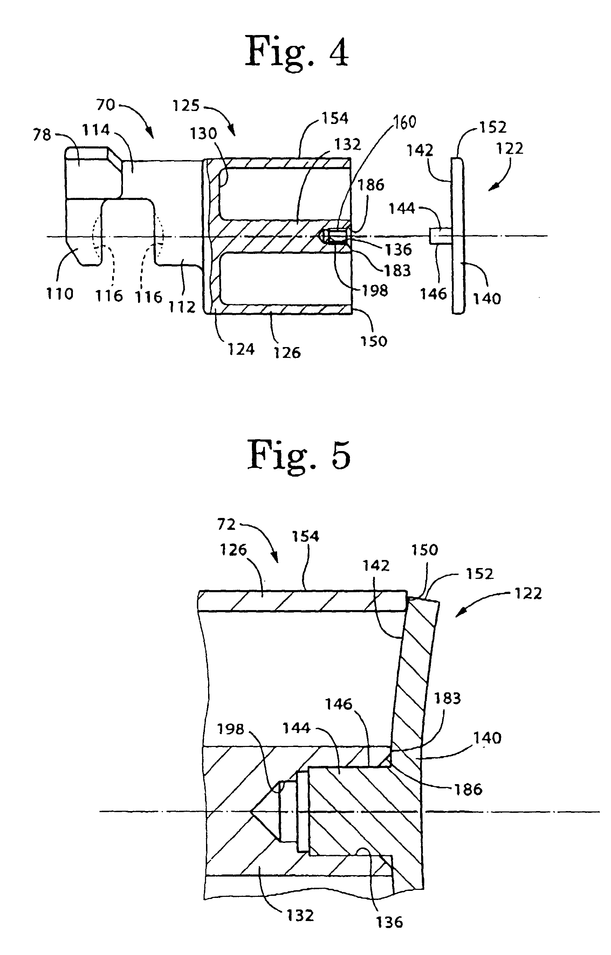

The disc-shaped end plate 122 has a diameter which is slightly smaller than an outer diameter of the cylindrical wall 126 of the hollow head portion 72, as shown in Fig. 5. Accordingly, the end plate 122 does not contact the inner cylindrical surface of the cylinder bore 12, as does the outer cylindrical wall 126 of the hollow head portion 72.

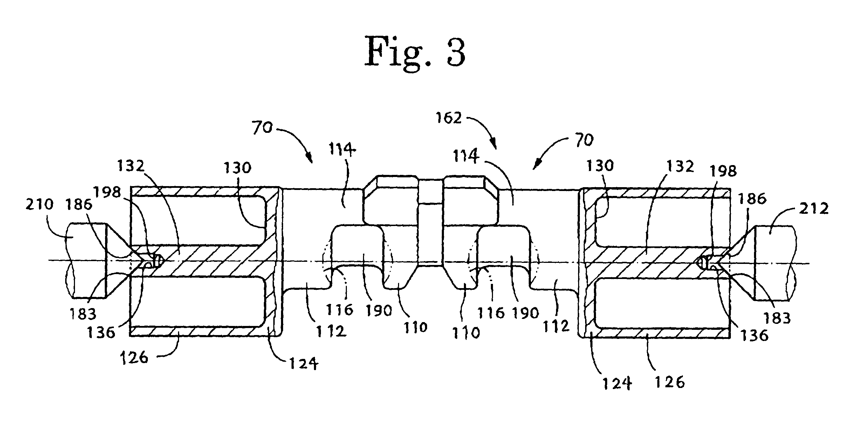

Two pistons 14 employed in the above-described compressor are manufactured from one blank 162 shown in Fig. 3. The blank 162 includes a pair of piston main parts 125 therein. A pair of engaging portions 70, which are coupled in the blank 162, position in the middle of the blank 162. A hollow head portion 72 which positions at each side of the connected engaging portions 70 in the blank 162 includes a cylindrical wall 126, a bottom wall 124 and a central axial protrusion 132. The hollow head portions 72 each have an opening at both ends of the blank 162.

The fitting hole 136 with a chamfered portion 186 is formed at the distal end 183 of the protrusion 132. The chamfered portion 186 gradually enlarges the fitting hole 136 at its opening and functions not only as a guide for fitting the protrusion 144 of the end plate 122 but also as a center hole when machined.

A rib 190, which is arranged in the engaging portion 70, connects inner lateral surfaces of arms 110, 112 and a bridge portion 114 formed in each the engaging portion 70. The rib 190 reinforces the engaging portion 70. Accordingly, rigidity of the blank 162 is enough to endure sandwiching force by a pair of center punches 210, 212 and cutting resistance when machined. When heat treatment is performed on the blank 162, the rib 190 also functions to restrain its distortion by heat.

In the embodiment the blank 162 is made of aluminum alloy, and is manufactured by molding, die-casting or forging. A preliminary hole 198 is formed at the center of the end of the central axial protrusion 132 before the fitting hole 136 is formed. Then, the fitting hole 136 and the chamfered portion 186 are formed by a machining tool. A diameter of the outer cylindrical surface 146 of the protrusion 144 of the end plate 122 is slightly larger than that of the inner cylindrical surface of the hole 136 so that the protrusion 144 is press-fitted into the hole 136 properly.

The outer surface of the cylindrical wall 126 formed in the blank 162 is machined by cutting and grinding. A centering is performed by fitting the pair of center punches 210, 212 into the chamfered portion 186. The blank 162 is rotated by the rotational center punches 210, 212, and the outer surface of the cylindrical wall 126 is machined. Both the center punches 210, 212 may be movable in the axial direction. In the embodiment, one of the punches is movable and the other is stationary. With the centering performed, the inner lateral surfaces of the arms 110, 112 of the engaging portion 70 which face each other are machined by a rotational machining tool. The concave 116, which retains the shoe 76, is formed, as shown with two-dot chain lines in Fig. 3.

Then, the outer surface of the cylindrical wall 126 is coated with a coating layer 120 whose main material is polytetrafluoroethylene or PTFE. After the coated outer surface of the cylindrical wall 126 is ground, two of the main part 125 are obtained by cutting the blank 162 at the middle.

Next, the main part 125 and the end plate 122 are connected to each other, as shown in Figs 4 and 5. The end plate 122 is also made of aluminum alloy and formed by casting and forging. The protrusion 144 formed on the end plate 122, coaxially positioned, approaches and press-fits into the fitting hole 136 of the central axial protrusion 132 of the hollow head portion 72. An adhesive 160 is also applied to the connection between the hole 136 and the protrusion 144. At this time, the chamfered portion 186 guides the protrusion 144 for press-fitting. After the end plate 122 is positioned in the radial direction by insertion of the protrusion 144 into the fitting hole 136, the press-fitting is performed. The outer peripheral portion 152 of the end plate 122 first comes in contact with the end surface 150 of the cylindrical wall 126 of the hollow head portion 72. Then, the end plate 122 is further pushed towards the cylindrical wall 126 until the inner portion 142 of the end plate 122 contacts the distal end 183 of the central axial protrusion 132. Accordingly, the fitting of the end plate 122 is regulated in depth.

In other words, the central axial protrusion 132 is slightly shorter than the length of the cylindrical wall 126 of the hollow head portion 72, as shown exaggeratedly in Fig. 5. The end plate 122, when completely press-fitted, is elastically deformed and slightly bent towards the inside space of the hollow head portion 72. Accordingly, the outer periphery 152 of the end plate 122 is strongly pressed by its elastic force against the end surface 150 of the cylindrical wall 126 so that the end plate 122 closes tightly the opening of the hollow head portion 72. Therefore, foreign substances such as lubricating oil are prevented from entering inside of the hollow head portion 72 through a clearance between the end plate 122 and the end surface 150 of the cylindrical wall 126.

Although the disc 140 of the end plate 122 in the above-embodiment has the diameter slightly smaller than the outer diameter of the cylindrical wall 126 of the hollow head portion 72, the diameter of the disc 140 may be substantially equal to the outer diameter of the cylindrical wall 126. However, if a disc diameter is small, it may worsen the compressive efficiency of the compressor. Accordingly, the outer diameter of the disc 140 should be determined properly.

In the embodiment described above, the cylindrical wall 126 can be formed thin because the hollow head portion 72 is connected to the end plate 122 by the connecting portion or the central axial protrusion 132, not connected at the outer periphery of the hollow head portion 72 that may need a thick cylindrical wall. The end plate 122 can also be formed thin because the end plate 122, even thin, endures the compressive force by a support of the central axial protrusion 132. Therefore, the entire piston can reduce its weight.

Furthermore, since the diameter of the disc 140 is slightly smaller than the outer diameter of the cylindrical wall 126, the disc 140 never contacts the cylinder bore 12. Accordingly, neither accurate machining nor coating on the disc 140 is required. When the piston 14 reciprocates in the cylinder bore 12, side force acts on and inclines the piston 14. However, even though the piston 14 is inclined in the cylinder bore 12, the end plate 122 does not contact the cylinder bore 12. That is, the side force received by the cylindrical wall 126, does not act on the end plate 122. Accordingly, the connecting protrusions 132, 144 need not be thick, thereby the weight of the piston 14 is further reduced.

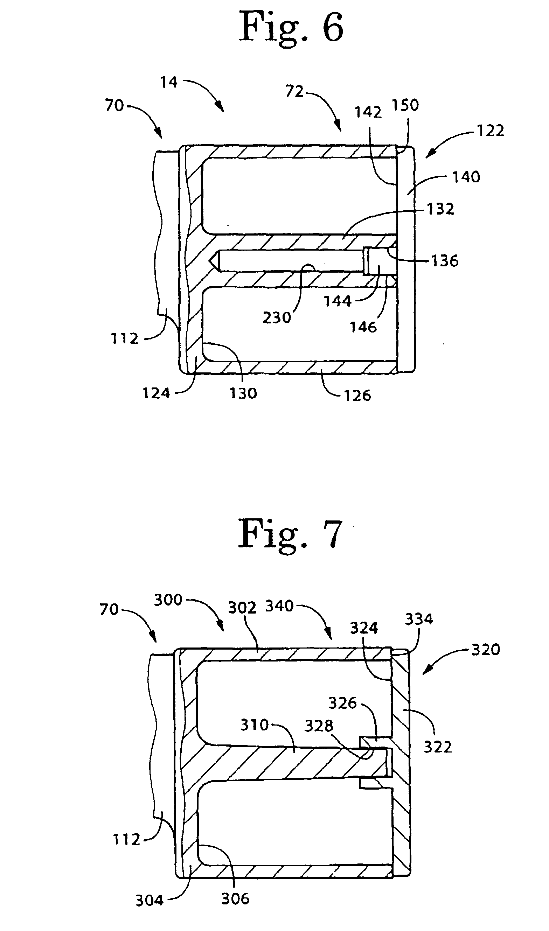

As shown in Fig. 6, a preliminary hole 230 for forming the fitting hole 136 of the central axial portion 132 is formed to extend substantially from the proximal end to the distal end of the central axial protrusion 132. In this case, the piston 14 having the long preliminary hole 230 is further reduced in weight.

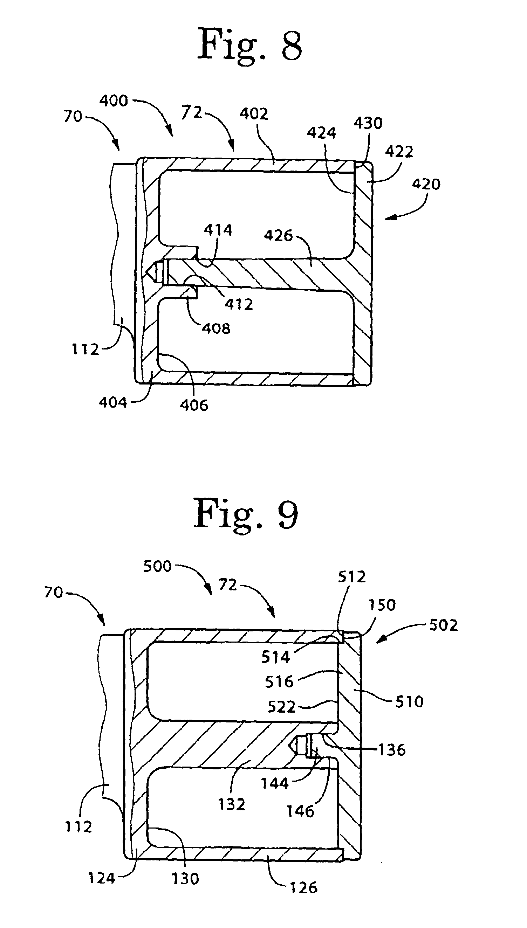

Another embodiments according to the present invention are shown in Figs. 7 and 8. The different aspects from the embodiments according to Figs. 1 to 5 are illustrated and described.

In a piston 300 shown in Fig. 7, a central axial protrusion 310 extending along a central axis of a cylindrical wall 302 with an opening at one end is formed integrally with a bottom wall 304. The central axial protrusion 310 protrudes from a center of an inner lateral surface 306 of the bottom wall 304. An end plate 320 which closes the opening of the cylindrical wall 302 includes a disc 322 and a fitting protrusion 326 protruding from a center of an end surface 324 of the disc 322. A fitting hole 328 is formed in the fitting protrusion 326.

In the embodiment, when the cylindrical wall 302 and the end plate 320 are connected, the cylindrical wall 302 and the end plate 320 are located in the same axis. An outer cylindrical surface of the distal end of the central axial protrusion 310 is press-fitted to the fitting hole 328 of the end plate 320 so that an end surface 334 of the cylindrical wall 302 contacts an outer peripheral portion of the end plate 320. As above described, a hollow head portion 340 of the piston 300 is formed.

In a piston 400 shown in Fig. 8, a fitting protrusion 408 is formed at a center of a bottom wall 404. A fitting hole 412 is formed on the fitting protrusion 408, and a chamfered portion 414 is formed on an end surface of the fitting protrusion 412. The fitting protrusion 412 and the chamfered portion 414 are formed after a preliminary hole is formed on the fitting protrusion 408. When an outer surface of the cylindrical wall 402 is machined, centering is performed by fitting a center punch to the chamfered portion 414. The end plate 420, which closes an opening of the cylindrical wall 402, includes a disc 422 and a central axial protrusion 426 extending in parallel with a central axis of the end plate 420 from a center of an end surface 424 of the disc 422. When the cylindrical wall 402 and the end plate 420 are connected, an end of the central axial portion 426 is press-fitted into the fitting hole 412 so that an outer peripheral portion of the end surface 424 of the disc 422 contacts an end surface 430 of the cylindrical wall 402.

The diameters of the discs 322 and 422 are smaller than the respective outer diameters of the cylindrical walls 302 and 402.

In the embodiment, a fitting hole may be formed at a center of the central axial protrusion 426. At this time, a protrusion from a center of the inner lateral surface 406 of the bottom wall 404 is press-fitted into the fitting hole.

The end plate may further have a step at its outer periphery, the step being fitted in the opening of the cylindrical wall. As shown in Fig. 9, the end plate 502 of the piston 500 includes a disc 510 and a fitting protrusion 144 protruding from a center of an end surface 522of the disc 510. The disc 510 includes a thickened portion 516 to have a step 514 at the outer periphery of the end plate 510. The step 514 is press-fitted in the opening of the cylindrical wall 126 as is the protrusion 144 press-fitted in the fitting hole 136 of the central axial protrusion 132 of the hollow head portion 72. The outer peripheral surface 512 and the inner portion of the disc 510 contact the end surface 150 and the distal end of the protrusion 132, respectively, in the same manner described before. The end plate 502 is therefore further improved to locate in the radial direction, accurately.

Adhesives or bonding agent may be applied between the cylindrical wall and the end plate before those connection as shown in Fig. 4. At this time, the connection between the cylindrical wall and the end plate is improved in strength, and the sealing therebetween is improved. Accordingly, foreign substance is prevented from entering inside of the hollow head portion through the clearance between the end plate and the end surface of the cylindrical wall satisfactorily.

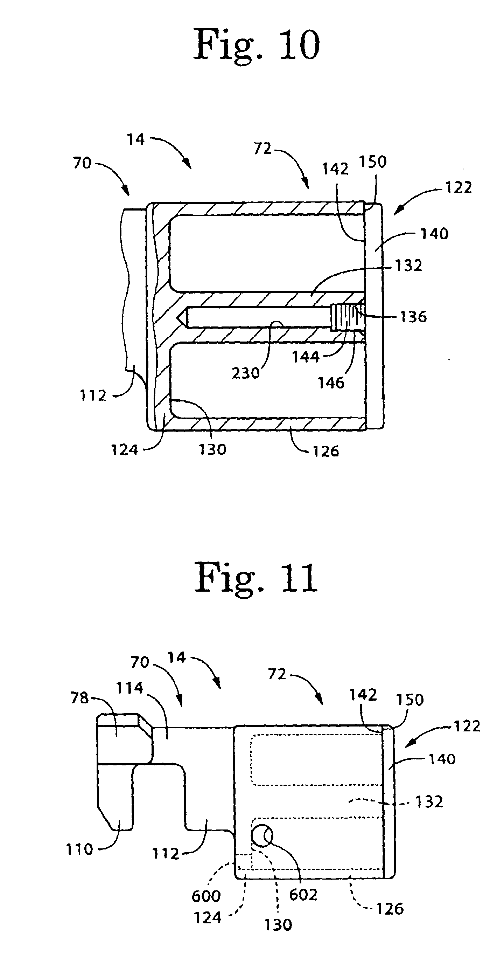

As shown in Fig. 10, the cylindrical wall and the end plate may be connected to each other by threading. In the embodiment shown in Figs. 1 to 5, the fitting hole 136 of the central axial portion 132 may be applied as an internal thread or a tapped fitting hole, and an external thread or a screw may be formed on the outer peripheral surface of the protrusion 144 of the end plate 122. At this time, the screw is threaded into the tapped fitting hole while the outer peripheral surface of the disc 140 is retained. In the embodiment shown in Fig. 7, the screw may be formed on the outer peripheral surface of the end of the central axial portion 310, and the fitting hole 328 of the end plate 320 may be applied as the tapped fitting hole.

Press-fitting or threading, and adhering may be applied together. Moreover, any combination of press-fitting, threading and adhering may be applied.

A through hole or a plurality of through holes may be formed on a cylindrical wall and/or a bottom wall of a hollow head portion of a piston. Even when foreign substance is entered inside of the hollow head portion through the clearance between the end plate and the end surface of the cylindrical wall, the foreign substance is released outside through the through holes. As shown in Fig. 11, when through holes 600 and 602 are formed on the bottom wall 124 and on the cylindrical wall 126 near the bottom wall 124, lubricating oil collected in the hollow head portion 72 is released outside through the through holes 600 and 602. Accordingly, the hollow head portion 72 of the piston 14 is prevented from increasing in weight. At this time, the released oil is supplied to the crank chamber 86 and the swash plate 60. Furthermore, the through holes reduce the weight of the piston 14. A size, shape, position and the number of the through hole are selective.

The pistons are manufactured from one piston blank shown in Fig. 3 which includes two piston main parts each having a hollow head portion and an engaging portion, the engaging portions being connected in the middle of the blank. However, the piston blank may have two main parts connected at their head portions in the blank, may have two main parts in which a head portion of the one main part is connected to an engaging portion of the other, or may have more than two main parts. Or, the piston blank may have just one main part and a corresponding end plate therein.

A hollow head portion and an end plate may be made of metallic material such as magnesium alloy. An end plate may be made of synthetic resin.

The present invention may be applied to a single-headed piston or a double-headed piston for use in a fixed displacement type swash plate compressor.

The present examples and embodiments are to be considered as illustrative and not restrictive and the invention is not to be limited to the details given herein but may be modified within the scope of the appended claims.

A piston includes an engaging portion for engaging with a piston drive mechanism for reciprocating the piston, a hollow head portion with an opening at its one end, and a disc-shaped end plate for closing the opening of the hollow head portion. The piston further includes a central axial protrusion extending in the axial direction. The protrusion is formed integrally with the hollow head portion. The end plate is connected to the central axial protrusion of the hollow head portion. The end plate also has a protrusion protruding towards the central axial protrusion of the hollow head. One of the protrusions has a fitting hole to which the other is press-fitted, thereby connecting the hollow head portion to the end plate to close the opening of the hollow head portion. A diameter of the disc-shaped end plate is smaller than an outer diameter of the cylindrical hollow head portion. Accordingly, the hollow head portion of the piston slides in a cylinder bore of the compressor without any contact between the end plate and the cylinder bore.

## Claims

1. A hollow head piston for use in a compressor comprising:
a hollow head portion to be slidably fitted in a cylinder bore of the compressor, said hollow head portion having an opening at its end;
an engaging portion for engaging with a piston drive mechanism for reciprocating said head portion in the cylinder bore, said engaging portion being formed at the other end of said head portion opposite to the opening;
an end portion attached to said hollow head portion to close the opening; and
a connecting portion axially extending within said hollow head portion and connecting said hollow head portion to said end portion.

2. The piston according to claim 1, wherein said hollow head portion has a bottom wall and a cylindrical wall extending from the bottom wall, and wherein said connecting portion protrudes from the bottom wall of said hollow head portion.

3. The piston according to claim 2, wherein at least one of the cylindrical wall and the bottom wall has a through hole which connects inside the hollow head portion to outside.

4. The piston according to claim 2, wherein the cylindrical wall of said hollow head portion is coated on its outer surface.

5. The piston according to claim 2, wherein said end portion has a disc having a diameter slightly smaller than an outer diameter of the cylindrical wall of said hollow head portion.

6. The piston according to claim 2, wherein said connecting portion is formed integrally with the bottom wall, said connecting portion having a distal end press-fitted in a fitting hole said end portion has.

7. The piston according to claim 6, wherein the press-fitting connection is accompanied by adhering.

8. The piston according to claim 2, wherein said connecting portion has a tapped fitting hole in which a screwed protrusion provided on said end portion is threaded.

9. The piston according to claim 1, wherein said connecting portion protrudes from said end portion.

10. The piston according to claim 1, wherein said connecting portion comprises protrusions extending from both the bottom wall of said hollow head portion and said end portion, one of the protrusions having a fitting hole the other is fitted in.

11. A compressor having a hollow head piston, the compressor comprising:
a housing having a cylinder bore therein;
a drive shaft rotatably supported by said housing;
a swash plate mounted on said drive shaft; and
a hollow head piston slidably fitted in the cylinder bore of said housing, said piston having a hollow head portion with an opening at its one end, an engaging portion engaged with said swash plate, an end portion closing the opening of the hollow head portion and a connecting portion axially extending within the hollow head portion and coupling the hollow head portion with the end portion.

12. The compressor according to claim 11, wherein said hollow head portion has a bottom wall and a cylindrical wall extending from the bottom wall, and wherein said connecting portion protrudes from the bottom wall of said hollow head portion.

13. The compressor according to claim 12, wherein at least one of the cylindrical wall and the bottom wall has a through hole which connects inside the hollow head portion to outside.

14. The compressor according to claim 12, wherein the cylindrical wall of said hollow head portion is coated on its outer surface.

15. The compressor according to claim 12, wherein said end portion has a disc having a diameter slightly smaller than an outer diameter of the cylindrical wall of said hollow head portion.

16. The compressor according to claim 12, wherein said connecting portion is formed integrally with the bottom wall, said connecting portion having a distal end press-fitted in a fitting hole said end portion has.
